(19) Europäisches Patentamt

European Patent Office

Office européen des brevets

(11) **EP 0 885 477 B1**

(12) **EUROPEAN PATENT SPECIFICATION**

(45) Date of publication and mention
of the grant of the patent:
**06.08.2003 Bulletin 2003/32**

(51) Int Cl.⁷: **H02J 3/26**

(21) Application number: **96913759.5**

(86) International application number:
**PCT/SE96/00557**

(22) Date of filing: **26.04.1996**

(87) International publication number:
**WO 96/034443 (31.10.1996 Gazette 1996/48)**

(54) **BALANCER EXECUTED WITH Z-CONNECTED WINDINGS**

AUSGLEICHER AUSGEFÜHRT MIT Z-WINDUNGEN

EQUILIBREUR REALISE A L'AIDE D'ENROULEMENTS MONTES EN Z

(84) Designated Contracting States:
**BE DE DK ES FI FR GB GR IT NL PT**

(30) Priority: **28.04.1995 SE 9501600**

(43) Date of publication of application:
**23.12.1998 Bulletin 1998/52**

(73) Proprietors:
• **Lundmark, Martin**
  **931 45 Skelleftea (SE)**
• **Hagelberg, Janolof**
  **937 91 Burtrask (SE)**

(72) Inventors:
• **Lundmark, Martin**
  **931 45 Skelleftea (SE)**
• **Hagelberg, Janolof**
  **937 91 Burtrask (SE)**

(74) Representative: **Onn, Thorsten et al**
**Zacco Sweden AB**
**P.O. Box 23101**
**104 35 Stockholm (SE)**

(56) References cited:
**DE-B- 2 155 903          US-A- 2 488 628**

• **DERWENT'S ABSTRACT, No. 86-231490/35,
Week 8635; & SU,A,1 206 881, (AS UKR
ELECTRODYNAMICS), 23 January 1980.**
• **DERWENT'S ABSTRACT, No. 90-88907/12, Week
9012; & SU,A,1 504 725, (AS UKR
ELECTRODYNAMICS), 30 August 1989.**
• **DERWENT'S ABSTRACT, No. 84-86649/14, Week
8414; & SU,A,1 023 524, [VOLOGDA
POLY(AUEL=)], 15 June 1983.**

## Description

The present invention relates to a balancer executed with Z-connected windings intended for use in a power supply unit to permit improvement of the balance in an electrical three-phase system, whereby the balancer functions for example as a filter and to permit the formation of a stable reference point with regard to the amplitude, phase and frequency of electrical quantities in a three-phase system. Power supply unit is the expression used specifically in this context to denote an apparatus designed to be used for the manipulation of electrical power by transformation, overvoltage limitation and current distribution, etc. A measurement apparatus is used to denote an apparatus designed for measurement purposes, in conjunction with which no significant power is drawn.

The underlying concept of the three-phase system requires the electrical circuit to be symmetrical and to contain pure sinusoidal voltages and currents. The currents are required for this purpose to pass through the three separate phase conductors, irrespective of whether a neutral conductor is present or otherwise. In an asymmetrical circuit with a neutral conductor, a current will then be obtained in the neutral conductor. A current will also occur in the neutral conductor under symmetrical loading with harmonics of a zero sequence nature. The presence of any current in the neutral conductor creates problems in the three-phase circuit, primarily in the form of:

- voltage asymmetries;
- live exposed components;
- losses in transformers and neutral conductors;
- magnetic fields, etc.

If the zero sequence current is now switched on to the phase conductors, the circuit will be more symmetrical, and the aforementioned problems will also be reduced to a corresponding degree. The arrangements for balancing different types of asymmetry in electrical three-phase circuits are previously disclosed. One example of such an arrangement is described in SU 1206-881. The previously disclosed construction is based on a previously disclosed Z-connection, in which capacitors are connected in parallel with primary windings connected to the phase conductors of the electrical three-phase circuit. The Z-connection is executed in a previously disclosed fashion on a tripod core, which is associated with certain disadvantages, however. A yoke flow is thus already present during no-load operation, which makes contact between different parts of the yoke outside the iron core itself. With the circuit under asymmetrical load, differences also occur due to the fact that the iron circuits are different and because the windings are not executed symmetrically over the iron lengths of the respective phases.

The asymmetry of the previously disclosed construction accordingly gives rise to stray fluxes, which increase under load and an increasing harmonic content.

A similar, previously disclosed arrangement is also described in SU 1504-725.

DE 2155903 describes a balancer executed in a different fashion. A Z-connection is not used in this case, and each phase has a separate magnetic core of conventional design. The number of secondary windings in this construction must correspond to the number of phases.

The arrangement in accordance with US 2 488 628 also offers the possibility of utilising separate magnetic cores for a balancer. The advantage is said to be simplified transport when handling each unit individually. Generally speaking, however, the operation of the construction does not involve any change.

A major object of the invention is to make available a balancer which provides even better balance in an electrical three-phase circuit than could be achieved with previously disclosed technology. This is possible with a balancer according to the characterising portion of the independent claim. The new balancer is intended to act both as an inductor and as a transformer. In the former case this comprises two windings of the secondary winding type on each magnetic core, and in the latter case one of the windings on each magnetic core is of the primary winding type.

In that the Z-connection is executed on three separate iron cores, the construction is entirely symmetrical for all three phases in the circuit. The symmetry can also be further improved - where two windings are used on each core - by causing the two windings to be wound simultaneously and uniformly distributed over the whole of the iron core. The stray flux is minimised in this way, and the zero sequence impedance becomes almost entirely resistive. This means that the zero sequence impedance is unaffected by the frequency, and that its strength is then determined only by the ability to wind the coils with coarse wire.

It should be noted that a Z-connected transformer on a tripod core gives a smaller magnetic leakage field than an equivalent transformer with a Y-connection on the secondary side. Three Z-connected single-phase transformers then further reduce the leakage field. A toroidal core gives a very low leakage field, depending on the shape of the windings and the choice of core material. A three-phase connection of toroids gives a lower leakage field than equivalent single-phase and three-phase transformers. Three toroidal transformers in a Z-connection combine the advantages of the toroid and the Z-connection.

Important characteristics of the invention, which are not evident from the foregoing, can be found in the dependent Patent Claims.

The characterising features and advantages of the invention are described in greater detail below in the form of preferred illustrative embodiments with reference to the accompanying drawings.

**Fig. 1** illustrates the balancer executed in accordance with the invention in association with an inductor connection.

**Fig. 2** illustrates the inductor connection effected in accordance with Fig. 1 supplemented by an additional open D-winding, to which external impedance elements can be connected.

**Fig. 3** illustrates in diagrammatic form the UI characteristic of a connection arrangement in accordance with Fig. 2.

**Fig. 4** illustrates one of several transformer connections in accordance with the invention.

**Figs. 5 and 6** illustrate a connection arrangement partly with capacitors in a Y-connection, and partly connected as for a Z-inductor.

**Fig. 7** illustrates a graph in respect of the frequency for the zero-sequence impedance for a connection arrangement in accordance with the invention.

Similar components in the different Figures in the drawing are identified with the same reference designations.

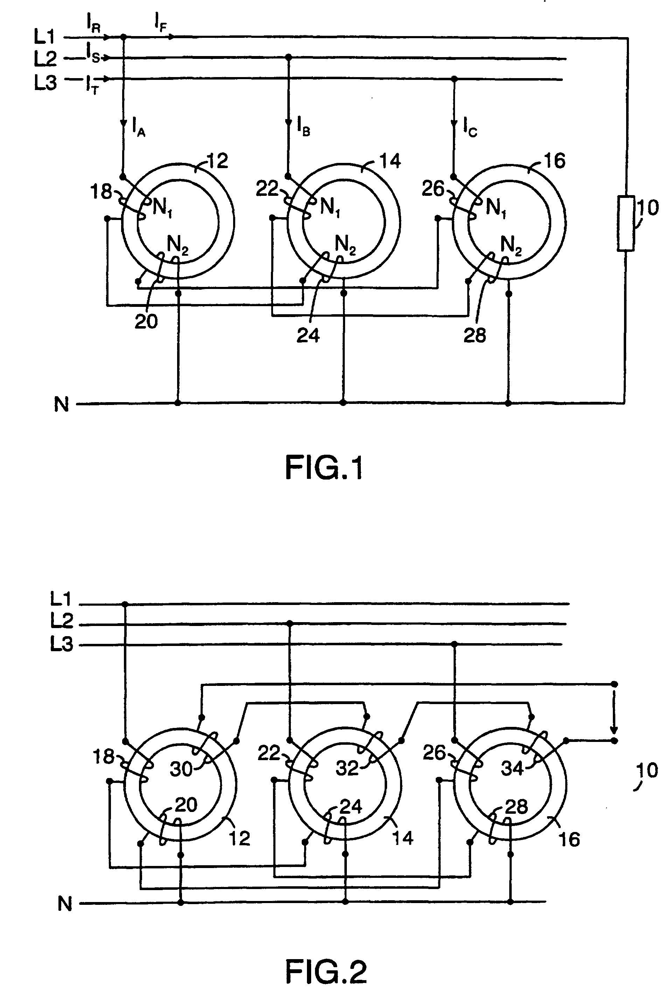

The balancer illustrated in Fig. 1 is connected as an inductor at a desired point in a distribution circuit with three line phases, L1, L2 and L3. A load 10 is connected between line phase L1 and the neutral conductor N. The balancer in the present case is provided with three entirely separate magnetic cores, 12, 14 and 16, made of iron. The magnetic cores 12, 14, 16 are executed as separately awanged toroids, and each core is provided with two electrical windings 18,20; 22,24 and 26,28. The windings on the respective cores are totally isolated from one another in an electrical sense and can be arranged concentrically (not shown in the drawing), in which case they possess rather different impedances. The resistive dissimilarity at low frequencies is counteracted in the illustrated Z-connection by always connecting an external winding, for example 18, to an inner winding 24. The difference in inductance nevertheless remains. Both the resistive and the inductive part are balanced by the use of two-wire winding. Increased stray flux also means a resistive loss, amongst other things due to current displacement. Because the magnetic cores 12, 14, 16 are entirely separate, there is no magnetic connection between them. However, this separation means that the requirement for ampere-turn balance for each core 12, 14, 16 is very high. A construction with separate cores and extended windings meets the target of achieving the smallest possible leakage field.

The underlying theory for the idea of invention is based on the following circumstances:

Let us assume that the windings 18,20;22,24; and 26,28 have different numbers of turns:

$$N_1 \text{ and } N_2$$

$$\bar{I}_R = \bar{I}_F + \bar{I}_A$$

$$\bar{I}_S = \bar{I}_B$$

$$\bar{I}_T = \bar{I}_C$$

$$-\bar{I}_F = \bar{I}_A + \bar{I}_B + \bar{I}_C$$

$$\bar{I}_A \cdot \bar{N}_1 = \bar{I}_C \cdot \bar{N}_2$$

$$\bar{I}_B \cdot \bar{N}_1 = \bar{I}_A \cdot \bar{N}_2$$

$$\bar{I}_C \cdot \bar{N}_1 = \bar{I}_B \cdot \bar{N}_2$$

The condition for the ampere-turn balance is thus that $\bar{N}_1 = \bar{N}_2$ and that the currents $\bar{I}_A = \bar{I}_B = \bar{I}_C$, which means that $\bar{I}_F = 3 \cdot \bar{I}_A$

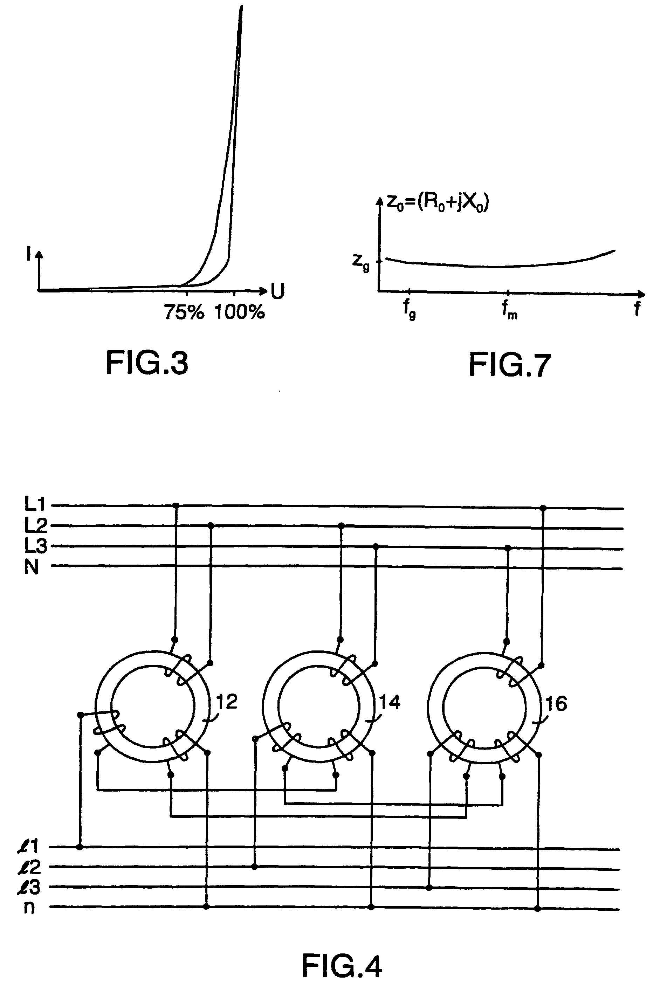

A Z-connected three-phase transformer/inductor, which is executed in accordance with the principles of the invention, can also be used for voltage limitation. The inductor connection illustrated in Fig. 1 may thus be supplemented as shown in Fig. 2 with an additional D-winding 30, 32 and 34 on the respective cores 12, 14 and 16. The UI characteristic at the articulation point in accordance with the graph in Fig. 3 can be varied with the help of this. The curve on the left of the graph shows the conditions when the extra D-winding is connected, and the curve on the right shows the conditions without an extra D-winding. This can be utilised both for electrical distribution and for electrical power generation, for example in conjunction with the capacitor magnetisation of an asynchronous machine. In this case the Z-connected inductor provides a circuit neutral point and load balancing, in addition to overvoltage protection. When the balancer is used for voltage limitation of this kind, its frequency characteristics are determined by the design of the winding and the core.

A Z-connected tripod transformer is normally wound with 15 per cent extra winding turns because of the phase position of the winding voltage. If three separate single-phase transformers are Z-connected in a toroid pattern to form a three-phase transformer, this can still be magnetised to full voltage without the need for additional winding turns. This is because the component voltages are deformed at the same time as the summated voltage over the windings is sinusoidal. This means that a transformer executed in accordance with the principles of the invention can be given a smaller number of winding turns, but with a certain increase in the harmonics content of the magnetisation current. This effect can be utilised partly to reduce the costs of a Z-transformer/inductor and partly for overvoltage limitation.

The method of winding toroid transformers permits the use of core material that is not in sheet form or jointed form. Solid cores can also be used. Cores of ferrite, etc., which have very good high-frequency characteristics, can be used with advantage in interference filters.

The primary winding of the three-phase transformer can be D-, Y- or Z-connected. The secondary side is always of Z-connected execution, however, so that it is symmetrical and of low impedance. The transformer connection illustrated in Fig. 4 by way of example has a D-connected primary side and a Z-connected secondary side. A customary limited short-circuit current will be obtained if the primary and secondary windings are executed separately. The advantages of this are that short-duration overvoltages can be dealt with on the primary side without the voltages on the secondary side being increased over the limitation level.

If a Z-connected inductor is connected at the end of an electrical circuit, a better balance will be achieved in the event of single-phase and two-phase short-circuiting along the length of the line. This means a balancing of voltages and current variations.

One embodiment of a Z-connected three-phase transformer/inductor with separate toroid-shaped magnetic cores involves the three phases during no-load operation being totally symmetrical with regard to voltage, current, power and power factor. When using separate magnetic cores, the power factor at the rated voltage is also significantly higher then when using a tripod core.

It is customary to measure the neutral point voltage using Y-connected impedance elements, inductors, resistances and capacitors. A Z-inductor, which consists of three single-phase reactors executed in accordance with the principles of invention, nevertheless exhibits a zero-sequence impedance which is significantly lower than its plus sequence impedance. The embodiment may be:

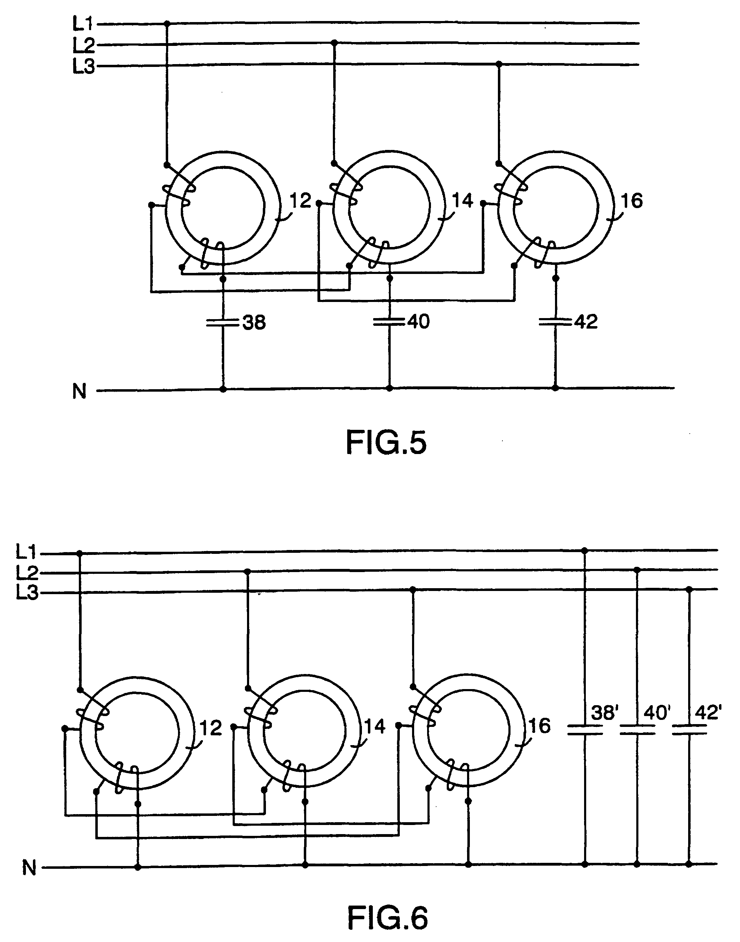

- in the form of a reactor (Fig. 1, but without load impedance (10));
- as a transformer (for example in accordance with Fig. 4); in addition combined with capacitors in accordance with Figs. 5 and 6.

In the connection in accordance with Fig. 5, the capacitors 38, 40, 42 occupy a large part of the fundamental tone voltage and thus reduce the size of the core.

In Fig. 6 the capacitors 38', 40', 42' compensate for the increasing leakage inductance at very high frequencies.

The zero-sequence impedance is traditionally regarded as being inductive ($Z_o = X_o$). The zero-sequence impedance generally consists partly of the characteristics of the wound coil and partly of the inductive characteristics of the core (compare with the inductive part of the magnetisation circuit in a current transformer). The Z-connection provides a balancing of the flow between the windings. The better the connection between the windings, the less the core is used. A good connection is achieved if the windings are wound in two-wire configuration. The ability of the toroidal winding to provide a low leakage field has the effect of reducing partly the direct leakage inductance and partly the supplement from the core. By Z-connecting three toroidal cores in a three-phase connection, which utilises the aforementioned characteristics, a very flat frequency characteristic is obtained for the a zero-sequence field impedance. This can be appreciated from the graph in Fig. 7, where $Z_g$ indicates the fundamental tone impedance, $f_g$ the fundamental tone frequency and $f_m$ the frequency at the minimum value of Zo.

The impedance at the fundamental tone frequency is almost only resistive, and the reactance changes slowly as the frequency increases. The rate of change depends on the manner of execution of the winding and the core. It can be seen from the graph that a minimum point is reached, which means that the zero-sequence impedance for third tones is lower than for the fundamental tone.The Z-connected toroidal transformer/reactor permits the zero-sequense impedance to be essentially resistive within a broad frequency range. The resistive part of the zero-sequence impedance then consists primarily of the resistance of the winding. The resistive frequency range can be further extended by the addition of the capacitors shown in Fig. 6.

Intermediate voltages can occur in the event of phase interruption in a normal three-phase electrical distribution network, which includes asymmetrical loads - single-phase or two-phase. In the event of contact to earth in the three-phase network, an increased voltage to earth occurs in any non-earthed phase conductors during the break-time. The extended earthing system can result in a voltage being applied between different earthed parts of the system, e.g. water pipe drains and water pipe protective earth connections, etc. From the point of view of electrical safety, balancing with the help of the balancer in accordance with the invention means that asymmetrical currents are fed back to the phases of the three-phase network as close as possible to the point of asymmetry.

An embodiment of the balancer as a transformer or reactor means that the zero-sequence impedance is markedly resistive in nature, and that the external magnetic field is small as a result.

A three-phase network, which utilises the balancer in accordance with the invention, will perform more symmetrically under varying loads, disturbances, switching on and off and phase loss, etc. This means fewer disturbance problems in the form of vagabonding currents, magnetic fields, overvoltages and overloads in neutral conductors and conductor rails. Individual remedies to these problems were previously found, without regard to the system as a whole.

## Claims

1. Balancer executed with Z-connected windings for use in a power supply unit to permit improvement of the balance in an electrical three-phase system, whereby the balancer functions for example as a filter and to permit the formation of a stable reference point with regard to the amplitude, phase and frequency of electrical quantities in a three-phase system, *characterized* **in that** the balancer for each phase in the three-phase system comprises a separate toroidal magnetic core (12, 14 and 16), on which are arranged at least two mutually electrically isolated windings (18, 20; 22, 24; and 26, 28), which are Z-connected, said windings being simultaneously and uniformly distributed over the whole of the toroidal core, whereby a zero sequence impedance becomes resistive.

2. Balancer as claimed in Claim 1, *characterized* **in that** it comprises two windings (20, 30; 24, 32; 28, 34) of the secondary winding type on each magnetic core (12, 14, 16), in conjunction with which the balancer is intended to act as a reactor.

3. Balancer as claimed in Claim 1, *characterized* **in that** one of the windings on each magnetic core (12, 14, 16) is of the primary winding type, in conjunction with which the balancer is intended to act as a transformer.

4. Balancer as claimed in one or other of Claims 1-3, *characterized* **in that** the magnetic cores (12,14,16) are homogeneous.

5. Balancer as claimed inone or other of Claims 1-4, *characterized* **in that** the magnetic cores (12, 14, 16) are ferrite cores.

6. Balancer as claimed in one or other of Claims 1-5, *characterized* **in that** the windings are arranged on each magnetic core (12, 14, 16) with a space between them.

## Patentansprüche

1. Ausgleicher mit Wicklungen in Z-Schaltung zur Verwendung in einer Stromversorgungseinheit für einen verbesserten Ausgleich in einem elektrischen Dreiphasensystem, wobei der Ausgleicher beispielsweise als Filter und zur Bildung eines stabilen Bezugspunkts bezüglich der Amplitude, der Phase und der Frequenz elektrischer Grössen in einem Dreiphasensystem dient, **dadurch gekennzeich-**

**net, dass** der Ausgleicher für jede Phase im Dreiphasensystem je einen separaten toroidalen Magnetkern (12, 14 und 16) aufweist, auf dem mindestens zwei elektrisch voneinander isolierte Wicklungen in Z-Schaltung (18, 20; 22, 24; und 26, 28) angeordnet sind, welche gleichzeitig und gleichförmig über den gesamten toroidalen Kern verteilt sind, wodurch eine Nullimpedanz resistiv wird.

2. Ausgleicher nach Anspruch 1, **dadurch gekennzeichnet, dass** auf den Magnetkernen (12, 14, 16) je zwei Wicklungen (20, 30; 24, 32; 28, 34) des sekundären Wicklungstyps vorhanden sind, in Verbindung mit welchen der Ausgleicher als Reaktanz dient.

3. Ausgleicher nach Anspruch 1, **dadurch gekennzeichnet, dass** jeweils eine der Wicklungen auf den Magnetkernen (12, 14, 16) eine Primärwicklung ist, in Verbindung mit welcher der Ausgleicher als Transformator dient.

4. Ausgleicher nach einem der Ansprüche 1 bis 3, **dadurch gekennzeichnet, dass** die Magnetkerne (12, 14, 16) homogen sind.

5. Ausgleicher nach einem der Ansprüche 1 bis 4, **dadurch gekennzeichnet, dass** die Magnetkerne (12, 14, 16) Ferritkerne sind.

6. Ausgleicher nach einem der Ansprüche 1 bis 5, **dadurch gekennzeichnet, dass** die Wicklungen auf jedem der Magnetkerne (12, 14, 16) voneinander beabstandet angeordnet sind.

## Revendications

1. Equilibreur exécuté avec des enroulements connectés en Z pour l'utilisation dans une unité d'alimentation afin de permettre une amélioration de l'équilibre dans un système électrique triphasé, où l'équilibreur sert de filtre, par exemple, et à permettre la formation d'un point de référence stable par rapport à l'amplitude, la phase et la fréquence de quantités électriques dans le système triphasé, **caractérisé en ce que** l'équilibreur pour chaque phase dans le système triphasé comprend un noyau magnétique toroïdal (12, 14 et 16) sur lequel sont agencés au moins deux enroulements (18, 20; 22, 24; et 26, 28) électriquement isolés l'un de l'autre et connectés en Z, lesdits enroulements étant répartis simultanément et uniformément sur le noyau toroïdal entier, de sorte à rendre une impédance homopolaire résistive.

2. Equilibreur selon la revendication 1, **caractérisé en ce qu'**il comprend deux enroulements (20, 30; 24, 32; 28, 34) du type secondaire sur chaque noyau magnétique (12, 14, 16) conjointement avec lesquels l'équilibreur est destiné à fonctionner comme circuit de réactance.

3. Equilibreur selon la revendication 1, **caractérisé en ce que** l'un des enroulements sur chaque noyau magnétique (12, 14, 16) est du type primaire, conjointement avec lesquels l'équilibreur est destiné à fonctionner comme transformateur.

4. Equilibreur selon l'une quelconque des revendications 1 à 3, **caractérisé en ce que** les noyaux magnétiques (12, 14, 16) sont homogènes.

5. Equilibreur selon l'une quelconque des revendications 1 à 4, **caractérisé en ce que** les noyaux magnétiques (12, 14, 16) sont des noyaux de ferrite.

6. Equilibreur selon l'une quelconque des revendications 1 à 5, **caractérisé en ce que** les enroulements sont arrangés sur chacun des noyaux magnétiques (12, 14, 16) avec un écart entre les enroulements.

FIG.1

FIG.2

FIG.3

FIG.7

FIG.4

FIG.5

FIG.6